# EUROPÄISCHE PATENTSCHRIFT

(11) **EP 3 536 141 B1**
(45) Veröffentlichungstag und Bekanntmachung des Hinweises auf die Patenterteilung: **06.04.2022**
(21) Anmeldenummer: 19158739.3
(22) Anmeldetag: 22.02.2019
(51) Int. Cl.: A01D 34/66, A01D 61/00

(54) **QUERFÖRDERER EINER LANDWIRTSCHAFTLICHEN ERNTEMASCHINE**
TRANSVERSE CONVEYOR FOR AN AGRICULTURAL HARVESTER
TRANSPORTEUR TRANSVERSAL D'UN ENGIN D'ABATTAGE-FAÇONNAGE AGRICOLE

(30) Priorität: 06.03.2018 DE 102018105108
(43) Veröffentlichungstag der Anmeldung: 11.09.2019
(73) Patentinhaber: CLAAS Saulgau GmbH, 88348 Bad Saulgau (DE)
(72) Erfinder: Rothmund, Stefan, 88367 Hohentengen (DE); Biesenberger, Ulrich, 88348 Bad Saulgau-Friedberg (DE); Gernert, Siegfried, 88339 Bad Waldsee (DE)

(56) Entgegenhaltungen:
- DE-A1-102005 020 462
- US-A- 3 060 665
- US-A- 3 509 699
- US-A- 4 546 599
- US-A1- 2012 216 498

## Beschreibung

Die Erfindung betrifft einen Querförderer für eine landwirtschaftliche Erntemaschine nach dem Oberbergriff des Anspruchs 1. Die Erfindung betrifft weiterhin ein Vorsatzgerät eines landwirtschaftlichen Erntefahrzeugs mit einem solchen Querförderer und ein landwirtschaftliches Erntefahrzeug mit einem solchen Vorsatzgerät.

Aus der DE 198 09 987 A1 ist ein Rotormähwerk bekannt, welches einen Querförderer umfasst. Der Querförderer verfügt über einen trommelartigen Grundkörper, der um eine Rotationachse antreibbar ist. Diese Rotationachse erstreckt sich dabei quer zu einer Längsrichtung eines das Rotormähwerk aufnehmenden Erntefahrzeugs. Mit dem trommelartigen Grundkörper sind zwei Querförderelemente verbunden. An einer ersten Seite des Grundkörpers ist ein erstes Querförderelement und an einer zweiten Seite des Grundkörpers ist ein zweites Querförderelement angeordnet. Jedes der Querförderelemente ist wendelartig ausgeführt und verfügt über mindestens zwei Windungen. Jede Windung erstreckt sich dabei um 360° um den Grundkörper herum. Eine Windung eines derartigen wendelartigen Querförderelements wird auch als Gang des Querförderelements bezeichnet. Mit beiden Querförderelementen kann Erntegut ausgehend von einem jeweiligen seitlichen Randbereich des Querförderers in Richtung auf einen Mittelabschnitt des Querförderers gefördert werden.

Aus US 2012/0216498 A1 ist ein Erntevorsatzgerät mit Mähscheiben bekannt, welches mit einer Querförderschnecke zum Fördern des Ernteguts von den äußeren Enden zur Mitte der Querförderschnecke ausgestattet ist. Gemäß einer Ausführung weist die Querförderschnecke zwei Schneckenwendeln mit jeweils einem Gang auf, der jeweils von einem äußeren Ende nach innen verläuft und im äußeren Bereich eine kleinere Steigung aufweist, so dass die Querförderelemente im äußeren Bereich einen kleineren Abstand zueinander aufweisen als innen. Gemäß einer weiteren Ausführung weist die Querförderschnecke Schneckenwendeln auf, die mit zwei gegeneinander versetzten Gängen jeweils von außen bis nach innen verlaufen. In dieser Ausführung weisen die Querförderelemente der Schneckenwendeln über die gesamte Förderstrecke den gleichen Abstand zueinander auf.

Aus den Dokumenten US 4 546 599 A, DE 10 2005 020 462 A1, US 3 060 665 A sowie US 3 509 699 A sind ebenfalls Erntegeräte mit Querförderschnecken bekannt.

Es besteht Bedarf daran, die Förderwirkung eines Querförderers einer landwirtschaftlichen Erntemaschine zu verbessern.

Hiervon ausgehend liegt der vorliegenden Erfindung die Aufgabe zugrunde, einen neuartigen Querförderer für eine landwirtschaftliche Erntemaschine sowie ein Vorsatzgerät und ein landwirtschaftliches Erntefahrzeug mit einem solchen Querförderer zu schaffen.

Diese Aufgabe wird durch einen Querförderer für eine landwirtschaftliche Erntemaschine nach Anspruch 1 gelöst.

Im Bereich der seitlichen Randabschnitte des Querförderers ist ein Abstand zwischen unmittelbar benachbarten Windungen der Querförderelemente kleiner als in dem Mittelabschnitt des Querförderers.

Dadurch, dass im Bereich der seitlichen Randabschnitte des Querförderers ein Abstand zwischen unmittelbar benachbarten Windungen und damit Gängen der Querförderelemente kleiner als in einem Mittelabschnitt des Querförderers ist, kann die Förderwirkung des Querförderers verbessert werden. Es besteht keine Gefahr, dass im Bereich der Randabschnitte Erntegut in Ecken einer Gerätemulde gelangt. Durch den geringeren Abstand zwischen unmittelbar benachbarten Windungen bzw. Gängen der Querförderelemente im Bereich der seitlichen Randabschnitte wird das Erntegut schneller aus dem jeweiligen seitlichen Randabschnitt in Richtung auf den Mittelabschnitt des Querförderers gefördert.

Nach der Erfindung erstreckt sich ausgehend von einem ersten Randabschnitt des Querförderers ein erstes wendelartiges, mindestens zwei Windungen aufweisendes Querförderelement in Richtung auf den Mittelabschnitt des Querförderers, wobei sich ausgehend von einem zweiten Randabschnitt des Querförderers ein zweites wendelartiges, mindestens zwei Windungen aufweisendes Querförderelement in Richtung auf den Mittelabschnitt des Querförderers erstreckt, wobei im Bereich des ersten seitlichen Randabschnitts des Querförderers ein drittes wendelartiges Querförderelement zwischen mindestens einer Windung des ersten wendelartigen Querförderelements positioniert ist, und wobei im Bereich des zweiten seitlichen Randabschnitts des Querförderers ein viertes wendelartiges Querförderelement zwischen mindestens einer Windung des zweiten wendelartigen Querförderelements positioniert ist. Das ist konstruktiv besonders einfach und erlaubt auch eine Nachrüstung bestehender Querförderer.

Nach einer vorteilhaften Weiterbildung der Erfindung sind im Bereich des ersten und zweiten seitlichen Randabschnitts das dritte und vierte Querförderelement jeweils in der Mitte oder in etwa in der Mitte der äußersten Windung des ersten wendelartigen Querförderelements bzw. des zweiten wendelartigen Querförderelements positioniert. Diese Ausgestaltung ist zur Bereitstellung einer optimierten Förderwirkung des Querförderers besonders bevorzugt.

Das Vorsatzgerät ist in Anspruch 5 und das landwirtschaftliche Erntefahrzeug ist in Anspruch 6 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Draufsicht auf einen erfindungsgemäßen Querförderer einer landwirtschaftlichen Erntemaschine mit einem Mähwerk;
- Fig. 2: eine Draufsicht auf den erfindungsgemäßen Querförderer einer landwirtschaftlichen Erntemaschine mit einer Aufnahmeeinrichtung.

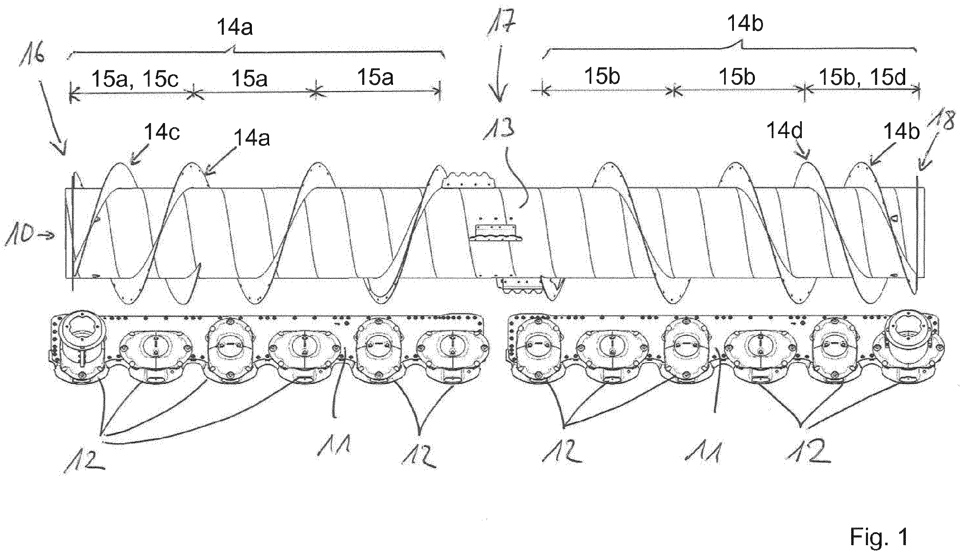

Fig. 1 zeigt eine Draufsicht auf einen erfindungsgemäßen Querförderer 10 einer landwirtschaftlichen Erntemaschine mit einem vor dem Querförderer 10 positionierten Mähbalken 11.

Der Querförderer 10 und der Mähbalken sind 11 Bestandteil einer als Mähwerk ausgebildeten Erntemaschine, die als Vorsatzgerät eines landwirtschaftlichen Erntefahrzeugs ausgebildet ist. Solche Mähwerke werden auch als Direktschneidwerke bezeichnet und besonders vorteilhaft als Vorsatzgeräte an selbstfahrenden Feldhäckslern bei der Herstellung von sogenannter Ganzpflanzensilage verwendet.

Die Mähbalken 11 verfügen über mehrere nebeneinander positionierten Mähorganen 12, die insbesondere dem Mähen von Getreidearten, Gras oder anderem Erntegut dienen. Von den Mähorganen 12 der Mähbalken 11 geschnittenes Erntegut gelangt in den Bereich des Querförderers 10, wobei der Querförderer 10 einen trommelartigen Grundkörper 13 sowie mehrere Querförderelemente 14 umfasst. Die Rotationsachse des Grundkörpers 13 erstreckt sich quer zur Längsrichtung eines die Erntemaschine tragenden Erntefahrzeugs, insbesondere eines selbstfahrenden Feldhäckslers.

An einer ersten Seite des trommelartigen Grundkörpers 13 ist ein erstes Querförderelement 14a angeordnet. An einer zweiten Seite des trommelartigen Grundkörpers 13 ist ein zweites Querförderelement 14b angeordnet. Die Querförderelemente 14a, 14b sind mit dem trommelartigen Grundkörper 13 verbunden.

Das erste Querförderelement 14a sowie das zweite Querförderelement 14b sind jeweils wendelartig mit mindestens zwei Windungen ausgebildet. Im gezeigten Ausführungsbeispiel stellen das erste Querförderelement 14a und das zweite Querförderelement 14b jeweils drei Windungen bereit. Unter einer Windung ist ein Abschnitt des wendelartigen Querförderelements 14a, 14b zu verstehen, der sich einmal um 360° um den trommelartigen Grundkörper 13 herum erstreckt. Eine Windung wird auch als Gang bezeichnet. In Fig. 1 sind für die beiden Querförderelemente 14a, 14b die Abschnitte ihrer jeweiligen Windungen durch Bezugsziffern 15a, 15b visualisiert.

Das erste Querförderelement 14a erstreckt sich ausgehend von einem ersten seitlichen Randabschnitt 16 des Querförderers 10 in Richtung auf einen Mittelabschnitt 17 desselben. Das zweite Querförderelement 14b erstreckt sich ausgehend von einem gegenüberliegenden zweiten Randabschnitt 18 des Querförderers 10 ebenfalls in Richtung auf den Mittelschnitt 17 desselben.

Das erste Querförderelement 14a dient dem Fördern von Erntegut ausgehend vom ersten seitlichen Randabschnitt 16 in Richtung auf den Mittelabschnitt 17. Das zweite Querförderelement 14b dient dem Fördern von Erntegut ausgehend vom zweiten Randabschnitt 18 in Richtung auf den Mittelabschnitt 17. Vom Mittelabschnitt 17 aus wird das Erntegut an eine nicht dargestellte Einzugseinrichtung des Erntefahrzeugs, insbesondere Feldhäckslers, übergeben.

Im Bereich der seitlichen Randabschnitte 16, 18 des Querförderers 10 ist ein Abstand zwischen unmittelbar benachbarten Windungen der Querförderelemente kleiner als in dem Mittelabschnitt 17 des Querförderers 10. Hierdurch kann die Förderwirkung des Querförderers 10 gesteigert werden.

Im gezeigten Ausführungsbeispiel der Fig. 1 erstreckt sich ausgehend vom ersten Randabschnitt 16 in Richtung auf den Mittelabschnitt 17 des Querförderers 10 das erste Querförderelement 14a mit den drei Windungen 15a. Ausgehend vom zweiten Randabschnitt 18 erstreckt sich in Richtung auf den Mittelabschnitt 17 das zweite Querförderelement 14b mit den drei Windungen 15b. Die Anzahl der Windungen des ersten Querförderelements 14a und des zweiten Querförderelements 14b beträgt jeweils mindestens zwei.

Im Bereich des ersten seitlichen Randabschnitts 16 des Querförderers 10 ist im Ausführungsbeispiel der Fig. 1 ein drittes wendelartiges Querförderelement 14c zwischen mindestens einer Windung 15a des ersten wendelartigen Querförderelements 14a positioniert und mit dem Grundkörper 13 verbunden.

Ebenso ist auf der gegenüberliegenden Seite des Querförderers 10 im Bereich des zweiten seitlichen Randabschnitts 18 des Querförderers 10 ein viertes wendelartiges Querförderelement 14d vorhanden, welches zwischen mindestens einer Windung 15b des zweiten wendelartigen Querförderelements 14b angeordnet und mit dem Grundkörper 13 verbunden ist.

Hierdurch wird im Bereich der beiden Randabschnitte 16 und 18 des Querförderers 10, und zwar im Bereich zumindest der äußersten seitlichen Windung 15a, 15b des jeweiligen, mehrere Windungen aufweisenden ersten bzw. zweiten Querförderers 14a, 14b, durch das Vorsehen des dritten Querförderelements 14c bzw. des vierten Querförderelements 14d der Abstand zwischen unmittelbar benachbarten Windungen verringert.

Im gezeigten Ausführungsbeispiel weist das erste wendelartige Querförderelement 14a eine konstante Steigung auf. Ebenso weist das zweite wendelartige Querförderelement 14b eine konstante Steigung auf.

Das dritte Querförderelement 14c und das vierte Querförderelement 14d weisen jeweils eine einzige Windung 15c bzw. 15d auf, die überlappend zur jeweiligen seitlich äußersten Windung 15a, 15b des ersten bzw. zweiten wendelartigen Querförderelements 14a, 14b verläuft, und zwar vorzugsweise derart, dass das dritte Querförderelement 14c in der Mitte oder in etwa in der Mitte der seitlich äußersten Windung 15a des ersten Querförderelements 14a und das vierte Querförderelement 14d in der Mitte oder in etwa in der Mitte der seitlich äußersten Windung 15b des zweiten wendelartigen Querförderelements 14b positioniert ist. Im Bereich der seitlich äußersten Windungen 15a, 15b von erstem und zweitem Querförderelement 14a, 14b ist demnach die Windung 15c, 15d von drittem bzw. viertem Querförderelement 14c, 14d um 180° oder in etwa 180° zu den Windungen 15a, 15b von erstem und zweitem Querförderelement 14a, 14b verdreht.

Durch den verringerten Abstand von unmittelbar benachbarten Windungen der Querförderelemente des Querförderers 10 im Bereich der seitlichen Randabschnitte 16, 18 desselben wird Erntegut, das im Bereich dieser seitlichen Randabschnitte 16, 18 in Richtung auf den Mittelabschnitt 17 zu fördern ist, schneller in Richtung auf den Mittelabschnitt 17 gefördert, sodass die Gefahr, dass das Erntegut aus dem Bereich des Querförderers 10 herausfällt, reduziert wird. Die Förderwirkung des Querförderers 10 kann so gesteigert werden.

Wie bereits ausgeführt, erstreckt sich im gezeigten Ausführungsbeispiel der dritte Querförderer 14c über den Bereich der seitlich äußersten Windung 15a des ersten Querförderers 14a, ebenso erstreckt sich das vierte Querförderelement 14d über den Bereich der seitlich äußersten Windung 15b des zweiten Querförderelements 14b. Das dritte und vierte Querförderelement 14c, 14d laufen demnach jeweils einmal um 360° um den trommelartigen Grundkörper 13 um, und zwar, wie bereits ausgeführt, um 180° oder in etwa 180° versetzt zur jeweiligen seitlich äußersten Windung 15a, 15b des ersten bzw. zweiten Querförderelements 14a, 14b. Dabei weisen im Ausführungsbeispiel sämtliche Querförderelemente 14a, 14b, 14c und 14d die gleiche Steigung auf, sodass demnach die jeweilige Windung des jeweiligen Querförderelements, wenn dieselbe um 360° um den trommelartigen Grundkörper 13 herum läuft, sich über einen Axialabschnitt identischer Länge entlang des trommelartigen Grundkörpers 13 erstreckt.

Eine derartige Ausführung des erfindungsgemäßen Querförderers 10 ist konstruktiv einfach, eignet sich zur Nachrüstung bestehender Querförderer und erlaubt die Bereitstellung einer optimierten Förderwirkung bzw. Förderleistung des Querförderers 10.

Es ist möglich, dass das dritte und vierte Querförderelement 14c, 14d kürzer oder länger als eine Windung sind. So kann sich das dritte und vierte Querförderelement 14c, 14d jeweils um 360°±90° um den Grundkörper 13 herum erstecken. Der Bereich von ±90° definiert ein drittes bzw. viertes Querförderelement 14c, 14d mit in etwa einer Windung 15c, 15d.

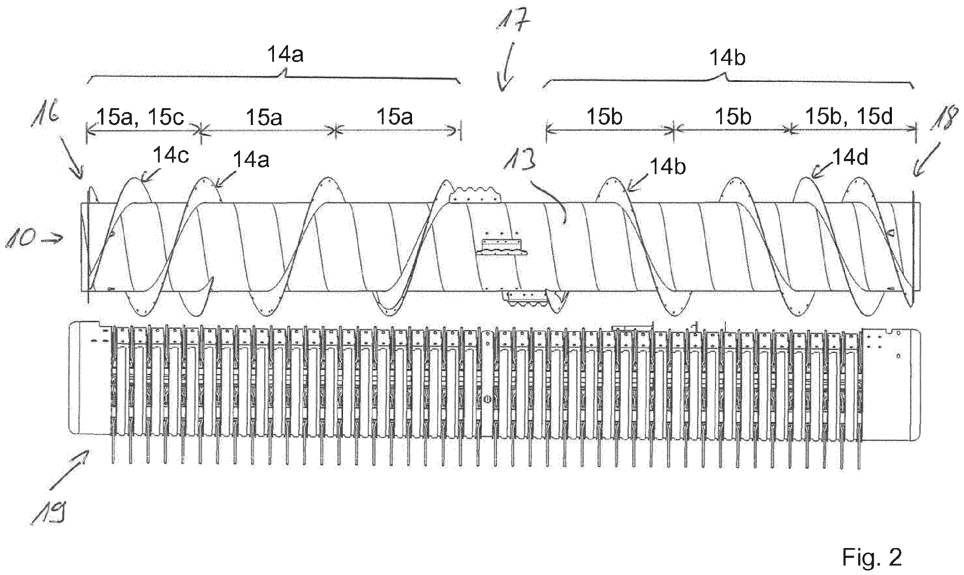

Fig. 2 zeigt den bereits unter Bezugnahme auf Fig. 1 beschriebenen Querförderer 10 zusammen mit einer Aufnahmeeinrichtung 19 für Erntegut, wobei es sich bei dieser Aufnahmeeinrichtung 19 um eine Baugruppe einer sogenannten Pick-up handeln kann.

Die Erfindung betrifft nicht nur den Querförderer 10 als solchen, sondern darüber hinaus auch ein Vorsatzgerät eines landwirtschaftlichen Erntefahrzeugs mit einem solchen Querförderer und ein landwirtschaftliches Erntefahrzeug mit einem solchen Vorsatzgerät.

Beim Vorsatzgerät kann es sich zum Beispiel um eine Aufnahmeeinrichtung bzw. Pick-Up oder auch um ein Mähwerk handeln.

Beim landwirtschaftlichen Erntefahrzeug handelt es sich insbesondere um einen Feldhäcksler.

Der Querförderer 10 kann jedoch auch bei einem Mähdrescher zum Einsatz kommen.

### Bezugszeichenliste

- 10: Querförderer
- 11: Mähbalken
- 12: Mähorgan
- 13: Grundkörper
- 14a: Querförderelement
- 14b: Querförderelement
- 14c: Querförderelement
- 14d: Querförderelement
- 15a: Windung
- 15b: Windung
- 15c: Windung
- 15d: Windung
- 16: Randabschnitt
- 17: Mittelabschnitt
- 18: Randabschnitt
- 19: Aufnahmeeinrichtung

## Patentansprüche

1. Querförderer (10) für eine landwirtschaftliche Erntemaschine,
mit einem Grundkörper (13), dessen Rotationachse sich quer zur Längsrichtung eines die Erntemaschine tragenden Erntefahrzeugs erstreckt, und
mit mindestens zwei mit dem Grundkörper (13) verbundenen, wendelartigen, mindestens zwei Windungen (15a, 15b) aufweisenden Querförderelementen (14a, 14b), wobei das jeweilige Querförderelement (14a, 14b) dem Fördern von Erntegut ausgehend von einem jeweiligen seitlichen Randabschnitt (16, 18) des Querförderers in Richtung auf einen Mittelabschnitt (17) des Querförderers dient,
und wobei sich ausgehend von einem ersten Randabschnitt (16) des Querförderers (10) ein erstes wendelartiges, mindestens zwei Windungen (15a) aufweisendes Querförderelement (14a) in Richtung auf den Mittelabschnitt (17) des Querförderers (10) erstreckt,
sich ausgehend von einem zweiten Randabschnitt (18) des Querförderers (10) ein zweites wendelartiges, mindestens zwei Windungen (15b) aufweisendes Querförderelement (14b) in Richtung auf den Mittelabschnitt (17) des Querförderers (10) erstreckt,
im Bereich des ersten seitlichen Randabschnitts (16) des Querförderers ein drittes wendelartiges Querförderelement (14c) zwischen mindestens einer Windung (15a) des ersten wendelartigen Querförderelements (14a) positioniert ist,
im Bereich des zweiten seitlichen Randabschnitts (18) des Querförderers ein viertes wendelartiges Querförderelement (14d) zwischen mindestens einer Windung (15b) des zweiten wendelartigen Querförderelements (14b) positioniert ist,
so dass im Bereich der seitlichen Randabschnitte (16, 18) des Querförderers ein Abstand zwischen unmittelbar benachbarten Windungen (15a, 15c, 15b, 15d) der Querförderelemente (14a, 14c, 14b, 14d) kleiner als in dem Mittelabschnitt (17) des Querförderers ist,
**dadurch gekennzeichnet, dass**
das dritte und vierte Querförderelement (14c, 14d) jeweils eine einzige Windung (15c, 15d) aufweist, die sich um 360°±90° um den Grundkörper (13) herum erstreckt.

2. Querförderer nach Anspruch 1, **dadurch gekennzeichnet, dass** das erste wendelartige Querförderelement (14a) und das zweite wendelartige Querförderelement (14b) jeweils eine konstante Steigung aufweisen.

3. Querförderer nach Anspruch 1 oder 2, **dadurch gekennzeichnet, dass** im Bereich des ersten seitlichen Randabschnitts (16) das dritte Querförderelement (14c) in der Mitte oder in etwa in der Mitte der seitlich äußersten Windung (15a) des ersten Querförderelements (14a) positioniert ist.

4. Querförderer nach einem der Ansprüche 1 bis 3, **dadurch gekennzeichnet, dass** im Bereich des zweiten seitlichen Randabschnitts (18) das vierte Querförderelement (14d) in der Mitte oder in etwa in der Mitte der seitlich äußersten Windung (15b) des zweiten Querförderelements (14b) positioniert ist.

5. Vorsatzgerät eines landwirtschaftlichen Erntefahrzeugs mit einem Querförderer nach einem der Ansprüche 1 bis 4.

6. Landwirtschaftliches Erntefahrzeug, insbesondere Feldhäcksler, mit einem Vorsatzgerät nach Anspruch 5.

## Claims

1. Transverse conveyor (10) for an agricultural harvesting machine,
with a basic body (13), the axis of rotation of which extends transversely with respect to the longitudinal direction of a harvesting vehicle carrying the harvesting machine, and
with at least two helical transverse conveyor elements (14a, 14b) which are connected to the basic body (13) and have at least two windings (15a, 15b), wherein the respective transverse conveyor element (14a, 14b) serves for conveying crop from a respective lateral edge portion (16, 18) of the transverse conveyor in the direction of a central portion (17) of the transverse conveyor,
and wherein a first helical transverse conveyor element (14a) having at least two windings (15a) extends from a first edge portion (16) of the transverse conveyor (10) in the direction of the central portion (17) of the transverse conveyor (10),
a second helical transverse conveyor element (14b) having at least two windings (15b) extends from a second edge portion (18) of the transverse conveyor (10) in the direction of the central portion (17) of the transverse conveyor (10),
in the region of the first lateral edge portion (16) of the transverse conveyor, a third helical transverse conveyor element (14c) is positioned between at least one winding (15a) of the first helical transverse conveyor element (14a),
in the region of the second lateral edge portion (18) of the transverse conveyor, a fourth helical transverse conveyor element (14d) is positioned between at least one winding (15b) of the second helical transverse conveyor element (14b),
such that a distance between immediately adjacent windings (15a, 15c, 15b, 15d) of the transverse conveyor elements (14a, 14c, 14b, 14d) is smaller in the region of the lateral edge portions (16, 18) of the transverse conveyor than in the central portion (17) of the transverse conveyor,
**characterized in that**
the third and fourth transverse conveyor element (14c, 14d) each have a single winding (15c, 15d) which extends by 360°±90° around the basic body (13) .

2. Transverse conveyor according to Claim 1, **characterized in that** the first helical transverse conveyor element (14a) and the second helical transverse conveyor element (14b) each have a constant pitch.

3. Transverse conveyor according to Claim 1 or 2, **characterized in that,** in the region of the first lateral edge portion (16), the third transverse conveyor element (14c) is positioned in the centre or approximately in the centre of the laterally outermost winding (15a) of the first transverse conveyor element (14a).

4. Transverse conveyor according to one of Claims 1 to 3, **characterized in that,** in the region of the second lateral edge portion (18), the fourth transverse conveyor element (14d) is positioned in the centre or approximately in the centre of the laterally outermost winding (15b) of the second transverse conveyor element (14b).

5. Attachment of an agricultural harvesting vehicle with a transverse conveyor according to one of Claims 1 to 4.

6. Agricultural harvesting vehicle, in particular field chopper, with an attachment according to Claim 5.

## Revendications

1. Transporteur transversal (10) pour une machine de récolte agricole,
comprenant un corps de base (13), dont l'axe de rotation s'étend transversalement à la direction longitudinale d'un véhicule de récolte portant la machine de récolte, et
comprenant au moins deux éléments de transport transversal (14a, 14b) reliés au corps de base (13), de type hélicoïdal, présentant au moins deux enroulements (15a, 15b), l'élément de transport transversal respectif (14a, 14b) servant à transporter le produit récolté à partir d'une section de bord latérale respective (16, 18) du transporteur transversal en direction d'une section centrale (17) du transporteur transversal,
et dans lequel, à partir d'une première section de bord latérale (16) du transporteur transversal (10), un premier élément de transport transversal de type hélicoïdal (14a), présentant au moins deux enroulements (15a), s'étend en direction de la section centrale (17) du transporteur transversal (10),
à partir d'une deuxième section de bord (18) du transporteur transversal (10), un deuxième élément de transport transversal de type hélicoïdal (14b), présentant au moins deux enroulements (15b), s'étend en direction de la section centrale (17) du transporteur transversal (10),
dans la zone de la première section de bord latérale (16) du transporteur transversal, un troisième élément de transport transversal de type hélicoïdal (14c) est positionné entre au moins un enroulement (15a) du premier élément de transport transversal de type hélicoïdal (14a),
dans la zone de la deuxième section de bord latérale (18) du transporteur transversal, un quatrième élément de transport transversal de type hélicoïdal (14d) est positionné entre au moins un enroulement (15b) du deuxième élément de transport transversal de type hélicoïdal (14b),
de telle sorte que, dans la zone des sections de bord latérales (16, 18) du transporteur transversal, une distance entre des enroulements directement voisins (15a, 15c, 15b, 15d) des éléments de transport transversal (14a, 14c, 14b, 14d) est inférieure à celle dans la section centrale (17) du transporteur transversal,
**caractérisé en ce que**
les troisième et quatrième éléments de transport transversal (14c, 14d) présentent chacun un enroulement unique (15c, 15d), qui s'étend sur 360° ± 90° autour du corps de base (13).

2. Transporteur transversal selon la revendication 1, **caractérisé en ce que** le premier élément de transport transversal de type hélicoïdal (14a) et le deuxième élément de transport transversal de type hélicoïdal (14b) présentent chacun un pas constant.

3. Transporteur transversal selon la revendication 1 ou 2, **caractérisé en ce que,** dans la zone de la première section de bord latérale (16), le troisième élément de transport transversal (14c) est positionné au milieu ou approximativement au milieu de l'enroulement (15a) le plus extérieur latéralement du premier élément de transport transversal (14a).

4. Transporteur transversal selon l'une quelconque des revendications 1 à 3, **caractérisé en ce que,** dans la zone de la deuxième section de bord latérale (18), le quatrième élément de transport transversal (14d) est positionné au milieu ou approximativement au milieu de l'enroulement (15b) le plus extérieur latéralement du deuxième élément de transport transversal (14b).

5. Appareil frontal d'un véhicule de récolte agricole comprenant un transporteur transversal selon l'une quelconque des revendications 1 à 4.

6. Véhicule de récolte agricole, notamment ensileuse, comprenant un appareil frontal selon la revendication 5.
